# EUROPÄISCHE PATENTANMELDUNG

(11) **EP 1 091 160 A2**
(43) Veröffentlichungstag der Anmeldung: **11.04.2001**
(21) Anmeldenummer: 00121711.6
(22) Anmeldetag: 04.10.2000
(51) Int. Cl.: F16L 59/16

(54) **Formteil**

(30) Priorität: 05.10.1999 DE 29917508 U
(71) Anmelder: REHAU AG + Co, 95111 Rehau (DE)
(72) Erfinder: Liebel, Volker, 95111 Rehau (DE)

(57) **Zusammenfassung**

Die Erfindung betrifft ein Formteil (1) zum Abdecken von Verbindungsstellen wärmeisolierter Rohre, bestehend aus einem Durchgangselement und einem von diesen wegweisenden Abzweigelement (2), wobei das Formteil wenigstens eine Außenseite des Durchgangselementes und/oder des von diesem wegweisenden Abzweigelementes (2) eine sich über die gesamte Länge der Außenseite erstreckende Öffnung aufweist.
Es wird ein Formteil (1) aufgezeigt, das zum Abdecken von Verbindungsstellen wärmeisolierter Rohre geeignet ist, das wirtschaftlich und kostengünstig herstellbar, das schnell und anwenderfreundlich montierbar ist und welches für Verbindungsstellen von abzweigenden wärmeisolierten Rohren mit unterschiedlichen Außendurchmessern verwendbar ist.
Dies wird dadurch gelöst, dass die durch das Einbringen der Öffnung entstehenden Flächen annähernd parallel einander gegenüberstehen, dass das Abzweigelement in einem definierten Winkel vom Durchgangselement wegweist und dass das Lumen des Formteils an wenigstens einem freien Ende durch ein Verschlusselement abgedeckt sein kann.

## Beschreibung

Die Erfindung betrifft ein Formteil zum Abdecken von Verbindungsstellen wärmeisolierter Rohre, bestehend aus einem Durchgangselement und einem von diesen wegweisenden Abzweigelement, wobei das Formteil an wenigstens einer Außenseite des Durchgangselementes und/oder des von diesem wegweisenden Abzweigelementes eine sich über die gesamte Länge der Außenseite erstreckende Öffnung aufweist.

Bei der Herstellung von Verbindungsstellen wärmeisolierter Rohre, beispielsweise bei T- oder L-förmigen Abzweigen müssen diese Verbindungsstellen nachträglich isoliert und abgedeckt werden.
Hierzu werden im bekannten Stand der Technik Halbschalen verwendet, welche aus extrudierten Rohren derart hergestellt werden, dass nach dem Verschweißen von zwei Rohren zu einem T-förmigen Formteil dieses komplett über seine Außenseiten aufgeschnitten und so als Abdeckteil verwendet wird. Diese Halbschalen werden nach der Isolierung auf die Verbindungsstellen wärmeisolierter Rohre aufgesetzt, gegeneinander und gegen die wärmeisolierten Rohre abgedichtet und dann durch separate Befestigungselemente wie Schrauben, Spannbänder und ähnliches fixiert. Diese Halbschalen, die auch im Spritzgießverfahren herstellbar sind, sind sehr zeit- und personalaufwendig auf den Verbindungsstellen wärmeisolierter Rohre zu montieren, wobei Montagefehler beispielsweise durch die Verwendung unterschiedlicher Halbschalen oder nicht spezifikationsgerechter Positionierung nicht ausgeschlossen sind. Ein weiterer Nachteil dieser Halbschalen besteht in ihrem aufwendigen Herstellungsverfahren, was neben den hohen Montageaufwendungen keine wirtschaftliche Verwertung zulässt.

Weiterhin nachteilig bei diesen Halbschalen ist die aufwendige aber nicht zuverlässige Abdichtung gegen eindringende Feuchtigkeit bzw. Schmutz.

Aus dem Stand der Technik sind weitere Formteile bekannt, die aus extrudierten Rohren herstellbar sind. Bei diesen werden die Rohre T-förmig miteinander verschweißt und danach die dem Abzweig gegenüberliegende Längsseite aufgetrennt.
Die Montage solcher Formteile gestaltet sich derart, dass diese über die Verbindungsstelle der abzweigenden wärmeisolierten Rohre geschoben werden und nach dem Abdichten der Verbindungsstelle durch Auseinanderziehen der an der dem Abzweig gegenüberliegenden Längsseite angebrachten Öffnung über die Verbindungsstelle der abzweigenden wärmeisolierten Rohre gezogen werden müssen, um diese abzudecken.

Der Nachteil derartiger Formteile besteht darin, dass diese nach dem Einbringen der Öffnung aufgrund der beim Extrusionsprozess erzeugten Eigenspannungen sich derart zusammenziehen, dass die durch die Öffnung erzeugten Flächen aneinander vorbeigleiten und das Formteil eine spiralförmige Gestalt aufweist. Ein weiterer sich daraus ergebender Nachteil ist, dass zum Auseinanderziehen der durch die Öffnung erzeugten Flächen ein erhöhter Kraftaufwand erforderlich ist, so dass die Montage eines derartigen Formteils zum Abdecken von Verbindungsstellen wärmeisolierter Rohre nur mit weiteren Hilfsmitteln bzw. zusätzlichem Montagepersonal möglich ist.

Ein weiterer Nachteil derartiger Formteile besteht dann, dass diese über ihre gesamte Länge einen konstanten Durchmesser aufweisen. Dies kann dazu führen, dass beim Abdecken von Verbindungsstellen wärmeisolierter Rohre mit unterschiedlichen Durchmessern diese durch das Formteil nicht exakt positioniert und fixiert sind. Zwischen dem Formteil und dem abzweigenden wärmeisolierten Rohr mit verringertem Durchmesser entsteht ein Spalt, welcher lediglich durch einen Schrumpfschlauch abgedeckt ist, der den mechanischen und chemischen Beanspruchungen einer Verbindungsstelle wärmeisolierter Rohre auf Dauer nicht gewachsen ist.
Derartige Formteile können auch nur bei Verbindungsstellen wärmeisolierter Rohre eingesetzt werden, wo für ein durchgehendes Rohr ein entsprechender Abzweig geschaffen werden muss. Nicht einsetzbar sind derartige Formteile zum Abdecken von L-förmigen Verbindungsstellen wärmeisolierter Rohre.

Zusätzlich nachteilig gestaltet sich die Abdichtung der Verbindungsstelle durch die sich bildende spiralförmige Gestalt des Formteils.

Hier setzt die Erfindung ein ,die es sich zur Aufgabe gestellt hat, die Nachteile des bekannten Standes der Technik dahingehend zu verbessern, dass ein Formteil zum Abdecken von Verbindungsstellen wärmeisolierter Rohre aufgezeigt wird, das wirtschaftlich und kostengünstig herstellbar, das schnell und anwenderfreundlich montierbar ist und welches für Verbindungsstellen von abzweigenden wärmeisolierten Rohren mit unterschiedlichen Außendurchmessern verwendbar ist.
Eine weitere Aufgabe der Erfindung besteht darin, ein Formteil zur Verfügung zu stellen, weiches sowohl bel T-förmigen als auch bel L-förmigen Verbindungsstellen wärmeisolierter Rohre verwendbar ist und das nach der Montage schnell und sicher abdichtbar ist.

Erfindungsgemäß wird die Aufgabe dadurch gelöst, dass die durch das Einbringen der Öffnung entstehenden Flächen annähernd parallel einander gegenüberstehen, dass das Abzweigelement in einem definierten Winkel vom Durchgangselement wegweist und dass das Lumen des Formteils an wenigstens einem freien Ende durch ein Verschlusselement abgedeckt sein kann.
Die Aufgabe wird weiterhin dadurch gelöst, dass das Durchgangselement von einem Abdichtungselement umgeben ist, wobei die Abdichtelemente an mindestens einem freien Enden so ausgeführt sind, dass diese sich wenigstens in Teilbereichen überlappend überdecken.

Mit dem erfindungsgemäßen Formteil können somit alle Verbindungsstellen wärmeisolierter Rohre leicht und problemlos abgedeckt werden, da die durch das Einbringen der Öffnung entstehenden Flächen sich nicht spiralförmig aneinanderlegen. Vorteilhaft beim erfindungsgemäßen Formteil ist, dass das Lumen an wenigstens einem freien Ende durch ein Verschlusselement abgedeckt sein kann, wodurch zum einen die in das Formteil eingebrachte Öffnung begleitend fixiert wird und zum andem das Formteil multifunktionell einsetzbar ist.
Ein weiterer Vorteil des erfindungsgemäßen Formteils besteht darin, dass an wenigstens einem freien Ende des Formteils wenigstens an in axialer Richtung liegender Ringabschnitt mit reduziertem Durchmesser angeformt ist. Weiterhin liegt es im Rahmen der Erfindung, den Ringabschnitt kegelförmig, konkav oder konvex auszuführen.
Das erfindungsgemäße Formteil kann in dieser Ausführungsform für die Verbindungsstellen von wärmeisolierten Rohren mit unterschiedlichen Durchmessern verwendet werden.
Dazu muss an der zu montierenden Verbindungsstelle nur jeweils der dem Durchmesser der wärmeisolierten Rohre entsprechende Ringabschnitt vom Formteil abgetrennt werden.

Somit ist es möglich, sowohl T- als auch L-förmige Verbindungsstellen mehrerer abzweigender Rohre entsprechend zu verbinden und abzudecken.

In einer weiteren vorteilhaften Ausführungsform des erfindungsgemäßen Formteiles wird der Mittelpunkt des Ringabschnittes mit dem reduzierten Außendurchmesser konzentrisch zur Formteilmittelachse angeordnet. Hierdurch ist es möglich, das Formteil auf der Verbindungsstelle der wärmeisolierten Rohre zu zentrieren und entsprechend zu fixieren.
In einer vorteilhaften Ausführungsform ist der Mittelpunkt des Ringabschnittes mit dem reduzierten Durchmesser exzentrisch zur Formteilmittelachse. Dadurch ist es möglich, dass zum Abdecken von Verbindungsstellen von im Erdreich verlegten wärmeisolierten Rohren eine konzentrische Anordnung erfolgt und somit die Verteilung der Belastungen auf das Formteil und die Verbindungsstelle entsprechend optimiert werden kann.

Die Erfindung lehrt weiter, dass das Abzweigelement des Formteils in einem Winkel von 10° bis 90° zur Formteilmittelachse vom Durchgangselement wegweist. In dieser Ausführungsform kann das erfindungsgemäße Formteil sowohl für T-förmige Verbindungsstellen als auch für Y-förmige bzw. L-förmige Verbindungsstellen eingesetzt werden. Die Öffnung, die notwendig ist um das Formteil zum Abdecken der Verbindungsstelle von wärmeisolierten Rohren zu verwenden, kann an verschiedenen auf dem Formteil markierten Stellen eingebracht werden, so dass die Montage bezüglich Zeit und Kosten immer optimiert durchgeführt werden können.

Das erfindungsgemäße Formteil ist vorteilhafterweise herstellbar durch Rotationsschmelzverfahren als auch im Extrusionsblasverfahren. Dies ist besonders vorteilhaft, da nach dem Herstellungsprozess das Formteil annähernd keine Eigenspannungen mehr aufweist, so dass eine nachträglich einzubringende Öffnung nicht zu einem spiralförmigen Zusammenziehen des Formteiles führt.
In einer weiteren Ausführungsform, beispielsweise bei einer Verbindungsstelle von drei winklig zueinanderführenden wärmeisolierten Rohren kann das Formteil aus zwei sich gegenüberliegenden Durchgangselementen bestehen, an deren gemeinsamer Schnittstelle das Abzweigelement in einem bestimmten Winkel davon wegweist.

Die Erfindung lehrt weiterhin, dass die Oberfläche des Formteils durch alternierende Wellenberge und Wellentäler ausgebildet sein kann.

Durch diese gewellte Struktur ist es möglich, dem Formteil eine größere Flexibilität zu verleihen.

Weiterhin vorteilhaft kann das Formteil zum Abdecken von Verbindungsstellen wärmeisolierter Rohre verwendet werden, bei denen zwischen den Rohren ein Absperrelement angebracht ist, welches zu einem späteren Zeitpunkt beispielsweise nach dem Verschließen der Baugruben, noch von außen bedienbar sein muss.

Die schnelle und sichere Abdichtung der Verbindungsstelle wärmeisolierter Rohre durch das erfindungsgemäße Formteil ist dadurch erreichbar, dass Abdichtelemente mit jeweils sich überlappenden, schräg ausgeführten freien Enden verwendet werden, deren sich überlappende freie Enden dem Abzweigelement gegenüber angeordnet sind.
Hierdurch kann vorteilhaft erreicht werden, dass die Öffnung des Formteils im kritischen Bereich doppelt abgesichert ist und dass durch die schräge Ausführung der freien Enden des Abdichtelementes diese sehr schnell und sicher um das Durchgangselement positionierbar sind.

Entsprechend dem Durchmesser des erfindungsgemäßen Formteiles und der Winkelstellung des Abzweigelementes zum Durchgangselement kann das Abdichtelement an seinen freien Enden eine konkave und/oder eine konvexe Gestalt aufweisen. Hier lässt sich entsprechend den Anforderungen des Formteiles an seiner Abdichtung die entsprechende Gestaltung des freien Endes des Abdichtelementes wählen, wobei sich ebenfalls eine S-förmige Gestalt als sehr vorteilhaft erwiesen hat.

Um das Aufbringen des Abdichtelementes einfach und sicher realisieren zu können, weist dieses eine schlauchförmige Gestalt auf, wobei es sich als ebenfalls vorteilhaft herausgestellt hat, hier einen Schrumpfschlauch einzusetzen.

In einer weiteren vorteilhaften Ausführung ist die dem Durchgangselement zugewandte Innenfläche des Abdichtelementes mit einem Klebstoff beschichtet, so dass eine umlaufende Abdichtung des Durchgangselementes und/oder des Abzweigelementes realisierbar ist.

Eine weitere vorteilhafte Abdichtung des erfindungsgemäßen Formteiles kann mittels Schweißverfahren, insbesondere Extruder- oder Heißluftschweißen erreicht werden. Hierbei ist es möglich, nicht nur die dem Abzweigelement gegenüberliegende Öffnung zu verschließen, sondern auch die Übergänge vom erfindungsgemäßen Formteil auf die wärmeisolierten Rohre.
Um erhöhte Dauerhaftigkeit dieser Verbindung zu erreichen, können die Übergänge vom Formteil auf die wärmeisolierten Rohre zusätzlich mit den vorbeschriebenen Abdichtelementen gesichert werden, wobei in diesem Fall auch auf die Abschrägung der freien Enden der Abdichtelemente oder auf deren Überlappung verzichtet werden kann.

Im Folgenden soll nun an den die Erfindung nicht beschränkenden Beispielen diese näher beschrieben werden. Es zeigen:
- Figur 1: Schnittdarstellung durch ein erfindungsgemäßes Formteil
- Figur 2: Schnittdarstellung durch eine Ausführungsform des erfindungsgemäßen Formteiles
- Figur 3: Montageprinzip des erfindungsgemäßen Formteils
- Figur 4:: Schnittdarstellung durch eine Ausführungsform eines abgedichteten erfindungsgemäßen Formteiles

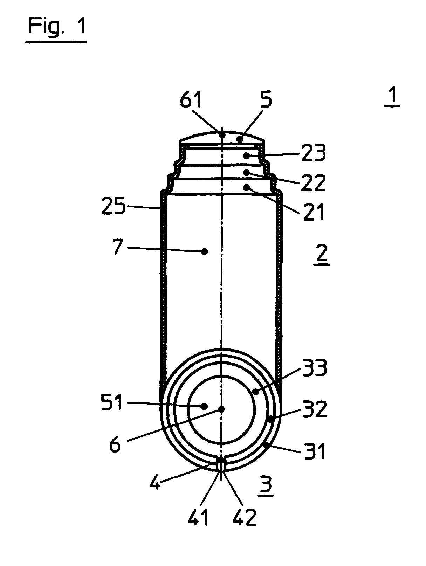

In Figur 1 ist das Formteil 1 in einer Ansicht von vom dargestellt. Das nach oben weisende Abzweigelement 2 weist an seinem freien Ende 25 die Ringabschnitte 21, 22, 23 auf, welche abnehmende Durchmesser aufweisen. Am Ringabschnitt 23 des freien Endes 25 ist das Verschlusselement 5 erkennbar, welches in dieser Ausführungsform einstückig mit dem freien Ende 25 des Abzweigelementes 2 des Formteiles 1 verbunden ist. Das Verschlusselement 5 verschließt somit das Lumen 7 des Abzweigelementes 2 des Formteiles 1. Das Durchgangselement 3, von dem das Abzweigelement 2 in einem annähernd rechten Winkel wegweist, weist in der hier dargestellten Ausführungsform an der dem Abzweigelement 2 entgegengesetzt liegenden Außenseite eine Öffnung 4 auf, deren Flächen 41, 42 annähernd parallel einander gegenüberstehen. Die Öffnung 4 erstreckt sich über die gesamte Länge der Außenseite und verläuft durch die Ringabschnitte 31, 32, 33, welche in axiale Richtung einen stufenartig reduzierten Außendurchmesser aufweisen, bis zum Verschlusselement 51.

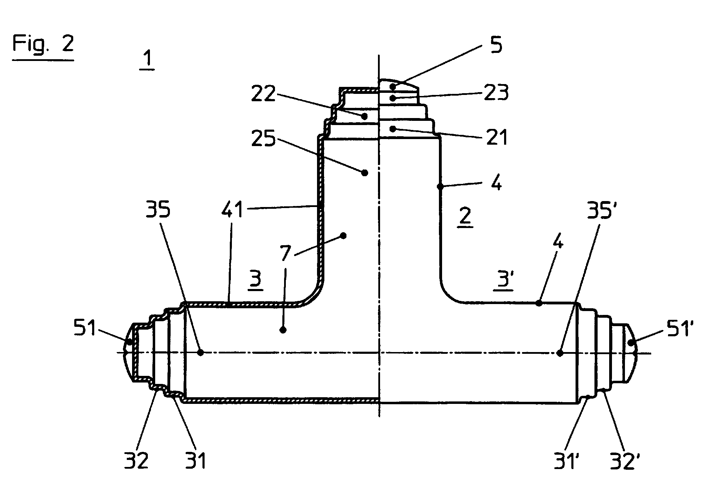

In der hier dargestellten Ausführungsform ist der Mittelpunkt 6 der Ringabschnitte 31, 32, 33 ebenso wie der Mittelpunkt 61 der Ringabschnitt 21, 22, 23 konzentrisch zur Formteilmittelachse ausgeführt.
Das in Figur 2 dargestellte Formteil 1 besteht in dieser Ausführungsform aus zwei sich gegenüberliegenden Durchgangselementen 3, 3' und einem in deren Schnittpunkt wegweisenden Abzweigelement 2. An den freien Enden 35, 35' der Durchgangselemente 3, 3' sind die Ringabschnitte 31, 31', 32, 32' einstückig angeformt, welche einen in axiale Richtung liegenden reduzierten Durchmesser aufweisen. Am Ringabschnitt 32, 32' des Durchgangselementes 3, 3' ist durch ein Verschlusselement 51, 51' einstückig angeformt, wobei das Verschlusselement 51, 51' das Lumen 7 des Durchgangselementes 3, 3' des Formteiles 1 verschließt. An der Schnittstelle der Durchgangselemente 3, 3' ist ein von diesem im Winkel von annähernd 90° wegweisendes Abzweigelement 2 einstückig angeformt. Am freien Ende 25 des Abzweigelementes 2 des Formteiles 1 sind ebenfalls in axialer Richtung liegende Ringabschnitte 21, 22, 23 mit reduziertem Durchmesser angeformt. Das freie Ende 25 mit den Ringabschnitten 21, 22, 23 wird durch das Verschlusselement 5 abgedeckt, welches somit das Lumen 7 des Abzweigelementes 2 des Formteiles 1 verschließt. In der hier dargestellten Ausführungsform wurde die Öffnung 4 in der Außenseite der Durchgangselemente 3, 3', von der annähernd rechtwinklig das Abzweigelement 2 wegweist, sowie in die Außenseiten des Abzweigelementes 2 eingebracht. In der auf der linken Seite gezeigten Halbschnittdarstellung ist erkennbar, dass die durch die Öffnung 4 entstandene Fläche 41 vom Ringabschnitt 32 des Durchgangselementes 3 und des Durchgangselementes 3' verlaufend beginnt und am Ringabschnitt 23 des Abzweigelementes 2 des Formteiles 1 endet. In dieser Ausführungsform kann eine L-förmige Verbindungsstelle wärmeisolierter Rohre abgedeckt werden.

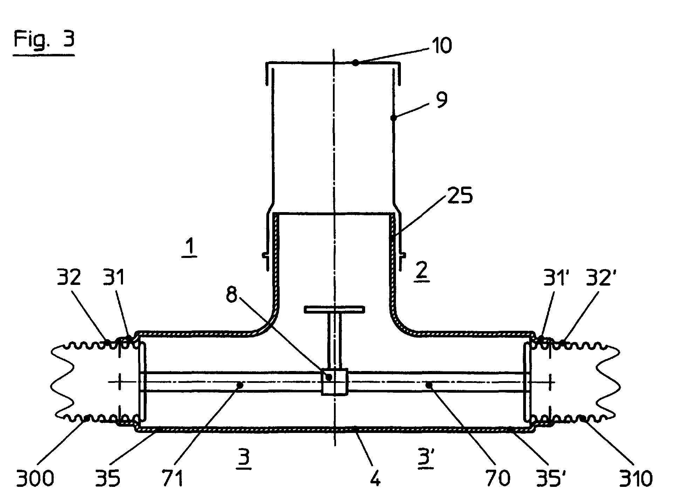

In Figur 3 verbindet das erfindungsgemäße Formteil 1 zwei wärmeisolierte Rohre 300, 310. Aus den wärmeisolierten Rohren 300, 310 ragen die Rohre 70, 71 hervor, welche parallel zur Formteilmittelachse der Durchgangselemente 3, 3' verlaufen und die über ein Absperrelement 8 miteinander verbunden sind.

Die an den freien Enden 35, 35' der Durchgangselemente 3, 3' in axialer Richtung angeformten Ringabschnitte 31, 31', 32, 32' sind nicht mehr verschlossen, so dass der am weitesten außenliegende Ringabschnitt 32, 32' einen Innendurchmesser aufweist, der dem Außendurchmesser der wärmeisolierten Rohre 300, 310 entspricht. Die Öffnung 4 ist in diesem Ausführungsbeispiel an der dem Abzweigelement 2 entgegengesetzten Außenseite der Durchgangselemente 3, 3' eingebracht
Am freien Ende 25 des Abzweigelementes 2 wurde sowohl das Verschlusselement 5 als auch die in axialer Richtung liegenden Ringabschnitte entfernt, so dass über das freie Ende 25 des Abzweigelementes 2 ein Kanalelement 9 befestigbar ist, welches durch einen Deckel 10 verschließbar ist. In dieser Ausführungsform ist das Absperrelement 8 jederzeit über das Abzweigelement 2, das Kanalelement 9 verfügbar, ohne dass aufwendige Aufgrabungsarbeiten erforderlich sind.

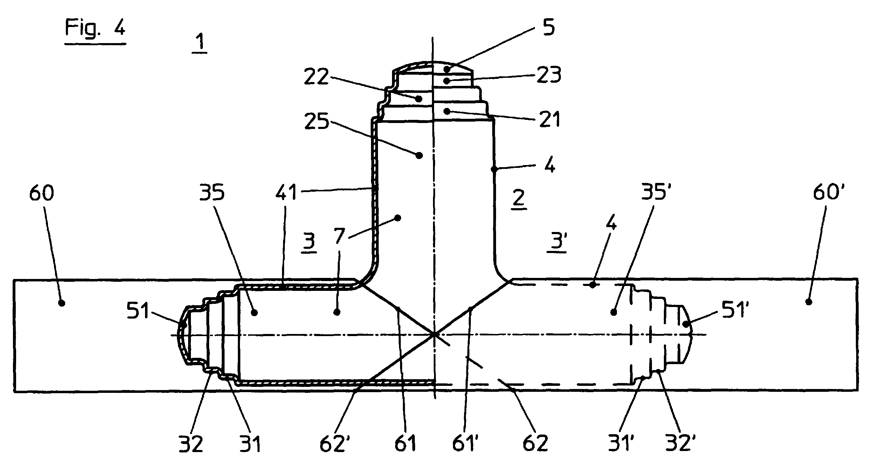

In Figur 4 weist das Formteil 1 zwei sich gegenüberliegende Durchgangselemente 3, 3' und einen in deren Schnittpunkt weg weisendes Abzweigelement 2 auf. Die Durchgangselemente 3, 3' sind von den Abdichtelementen 60, 60' umgeben, wobei deren freie Enden 61, 61' schräg ausgeführt sind.
In dieser Ausführungsform sind die Abdichtelemente 60, 60' Schrumpfschläuche, welche an der Innenfläche mit einem Klebstoff beschichtet sind. Die Abdichtelemente 60, 60' werden so auf dem Durchgangselement 3, 3' angeordnet, dass sich die freien Enden 61, 61' wenigstens teilweise überdecken und dass die spitzen Enden 62, 62' gegenüber dem Abzweigelement 2 angeordnet sind. Durch Temperatureinwirkung auf die Abdichtelemente 60, 60' und die damit verbundene Aktivierung des auf der Innenseite der Abdichtelemente 60, 60' befindlichen Klebstoffes erfolgt nun die endgültige Abdichtung des erfindungsgemäßen Formteiles 1.

## Patentansprüche

1. Formteil zum Abdecken von Verbindungsstellen wärmeisolierter Rohre, bestehend aus einem Durchgangselement und einem von diesem wegweisenden Abzweigelement, wobei das Formteil an wenigstens einer Außenseite des Durchgangselementes und/oder des von diesem wegweisenden Abzweigelementes eine sich über die gesamte Länge der Außenseite erstreckende Öffnung aufweist,
dadurch gekennzeichnet,
dass die durch das Einbringen der Öffnung (4) entstehenden Flächen (41, 42) annähernd parallel einander gegenüberstehen, dass das Abzweigelement (2) in einem definierten Winkel vom Durchgangselement (3, 3') wegweist und dass das Lumen (7) des Formteiles (1) an wenigstens einem freien Ende (25, 35, 36) durch ein Verschlusselement (5, 51, 51') abgedeckt sein kann.

2. Formteil nach Anspruch 1, dadurch gekennzeichnet, dass an wenigstens einem freien Ende (25, 35, 35') des Formteiles (1) wenigstens ein in axialer Richtung liegender Ringabschnitt (21, 22, 23, 31, 32, 33) mit reduziertem Durchmesser angeformt ist.

3. Formteil nach einem der vorhergehenden Ansprüche, dadurch gekennzeichnet, dass der Mittelpunkt (6) des in axialer Richtung liegenden Ringabschnittes (21, 22, 23, 31, 32, 33) mit reduziertem Durchmesser konzentrisch zur Formteilmittelachse ist.

4. Formteil nach einem der vorhergehenden Ansprüche, dadurch gekennzeichnet, dass der Mittelpunkt (6) des in axialer Richtung liegenden Ringabschnittes (21, 22, 23, 31, 32, 33) mit reduziertem Durchmesser exzentrisch zur Formteilmittelachse ist.

5. Formteil nach einem der vorhergehenden Ansprüche, dadurch gekennzeichnet, dass die Oberfläche durch alternierende Wellenberge und Wellentäler ausgebildet ist.

6. Formteil nach einem der vorhergehenden Ansprüche, dadurch gekennzeichnet, dass das Abzweigelement (2) in einem Winkel von 10° bis 90° zur Formteilmittelachse und Durchgangselement wegweist.

7. Formteil nach einem der vorhergehenden Ansprüche, dadurch gekennzeichnet dass die Herstellung durch Rotationsschmelzverfahren oder Extrusionsblasverfahren erfolgt.

8. Formteil nach einem der vorhergehenden Ansprüche, dadurch gekennzeichnet, dass es nach dem Herstellungsprozess annähernd keine Eigenspannungen aufweist.

9. Formteil zum Abdecken von Verbindungsstellen wärmeisolierter Rohre, bestehend aus einem Durchgangselement und einem von diesem weg weisenden Abzweigelement, wobei das Formteil an wenigstens einer Außenseite des Durchgangselementes und/oder des von diesem weg weisenden Abzweigelementes eine sich über die gesamte Länge der Außenseite erstreckende Öffnung aufweist,
dadurch gekennzeichnet,
dass das Durchgangselement (3, 3') von einem Abdichtelement (60, 60') umgeben ist, wobei das Abdichtelement (60, 60') an mindestens einem freien Ende (61, 61') so ausgeführt ist, dass diese freien Enden (61, 61') sich wenigstens in Teilbereichen überlappend überdecken.

10. Formteil nach Anspruch 9, dadurch gekennzeichnet, dass die sich überlappenden freien Enden (61, 61') des Abdichtelements (60, 60') dem Abzweigelement (2) gegenüber angeordnet sind.

11. Formteil nach den Ansprüchen 9 bis 10, dadurch gekennzeichnet, dass die freien Enden (61, 61') des Abdichtelementes (60, 60') schräg ausgeführt sind.

12. Formteil nach den Ansprüchen 9 bis 11, dadurch gekennzeichnet, dass die freien Enden (61, 61') des Abdichtelementes (60, 60') konkav ausgeführt sind.

13. Formteil nach den Ansprüchen 9 bis 12, dadurch gekennzeichnet dass die freien Enden (61, 61') des Abdichtelementes (60, 60') konvex ausgeführt sind.

14. Formteil nach den Ansprüchen 9 bis 13, dadurch gekennzeichnet dass die freien Enden (61, 61') des Abdichtelementes (60, 60') S-förmig ausgeführt sind.

15. Formteil nach den Ansprüchen 9 bis 14, dadurch gekennzeichnet dass das Abdichtelement (60, 60') schlauchförmig ist.

16. Formteil nach den Ansprüchen 9 bis 15, dadurch gekennzeichnet, dass das Abdichtelement (60, 60') ein Schrumpfschlauch ist.

17. Formteil nach den Ansprüchen 9 bis 16, dadurch gekennzeichnet, dass die dem Durchgangselement (3, 3') zugewandte Innenfläche des Abdichtelementes (60, 60') mit einem Klebstoff beschichtet ist.

18. Formteil nach einem der vorhergehenden Ansprüche, dadurch gekennzeichnet, dass die dem Abzweigelement (2) gegenüberliegende Öffnung (4) des Durchgangselementes (3,3') mittels Schweißverfahren geschlossen wird.

19. Formteil nach einem der vorhergehenden Ansprüche, dadurch gekennzeichnet dass Übergänge vom Formteil auf die wärmeisolierten Rohre mittels Schweißverfahren geschlossen werden.

20. Formteil nach Anspruch 18 oder 19, dadurch gekennzeichnet dass bei den Abdichtelementen (60,60') auf die Abschrägung der freien Enden (61,61') oder auf die Überlappung der Abdichtelemente verzichtet wird.
